# EUROPÄISCHE PATENTANMELDUNG

(11) **EP 3 578 247 A1**
(43) Veröffentlichungstag der Anmeldung: **11.12.2019**
(21) Anmeldenummer: 19175687.3
(22) Anmeldetag: 21.05.2019
(51) Int. Cl.: B01D 53/86, B01J 21/06, B01J 23/652, B01J 35/04

(54) **WABENKATALYSATOR, VERFAHREN ZUR OXIDATION VON KOHLENMONOXID UND ORGANISCHEN LUFTSCHADSTOFFEN MIT DEM WABENKATALYSATOR SOWIE VERWENDUNG DES WABENKATALYSATORS**

(30) Priorität: 06.06.2018 DE 102018113502
(71) Anmelder: Clariant International Ltd, 4132 Muttenz (CH)
(72) Erfinder: KLOSE, Frank, 83026 Rosenheim (DE); BUETTNER, Olaf, 83059 Rosenheim (DE)

(57) **Zusammenfassung**

Die Erfindung betrifft einen Wabenkatalysator zur Oxidation von CO und organischen Luftschadstoffen in einem Abgasstrom, wobei der Wabenkatalysator aus einem Material gebildet ist, das Oxide des Wolframs und Titans enthält, die mit einem Edelmetall dotiert sind und wobei der Wabenkatalysator eine Wabendichte unterhalb von 20 cpsi aufweist.

Ein derartiger Wabenkatalysator ist besonders zur Oxidation von CO und organischen Luftschadstoffen unter hohen Staubbelastungen geeignet.

## Beschreibung

Die Verbrennungsabgase aus industriellen Anwendungen enthalten gewöhnlich Kohlenmonoxid und organische Reststoffe, wie zum Beispiel Kohlenwasserstoffverbindungen, die nicht in die Umwelt abgegeben werden sollen. Um die Emission von Kohlenmonoxid und der organischen Reststoffe zu verhindern, bedarf es daher einer geeigneten Abgasbehandlung.

Die zu reinigenden Gase enthalten jedoch häufig nicht nur Kohlenmonoxid und organische Reststoffe, sondern auch größere Mengen Wasserdampf und mineralischen Staub. Bei herkömmlichen Oxidationskatalysatoren verdrängt nach einiger Betriebszeit der Wasserdampf andere Moleküle von der Katalysatoroberfläche, so dass die katalytische Leistung der Katalysatoren durch chemische Inhibierung absinkt. Zusätzlich kann sich durch Kapillarkondensation auch bei Temperaturen unterhalb von 300 °C ein Wasserfilm auf der Katalysatoroberfläche herausbilden, der den Zugang der zu oxidierenden Schadstoffmoleküle und des zu ihrer Oxidation benötigten Sauerstoffs zu den aktiven Zentren des Katalysators blockiert, was zu einem Aktivitätsverlust des Katalysators führen kann.

Aufgrund der hohen Konzentration von Stäuben in Abgasen von Kraftwerken können sich durch die Abscheidung der Stäube Schichten auf der Katalysatoroberfläche bilden, die ebenfalls den Zutritt der zu oxidierenden Schadstoffmoleküle zur Katalysatoroberfläche behindern. Da die Stäube eine gewisse Rauigkeit aufweisen, bleiben die abgeschiedenen Partikel insbesondere bei hoher Gasfeuchte durch Adhäsionskräfte gut haften, was ebenfalls zu einem Aktivitätsverlust der Katalysatoren führen kann.

Prinzipiell ist es möglich, den mineralischen Feinstaub, sowie eventuell auch dünne Wasserfilme auf den Katalysatoren zu entfernen. Dazu müssen jedoch oft die vorgeschalteten Anlagen, wie Kraftwerksanlagen, abgeschaltet werden, um den Katalysator abzukühlen. Die damit verbundenen Stillstandzeiten sind teuer und für Anlagenbetreiber wirtschaftlich nicht akzeptabel.

Abgase mit hohen Anteilen an Staub und gegebenenfalls Wasserdampf, die Kohlenmonoxid und organische Verbindungen enthalten, fallen beispielsweise in der Zementindustrie, aber auch bei Glasschmelzen oder Metallsinteranlagen an. Dabei sind die Abgase dieser Anlagen häufig auch stark mit mineralischen Stäuben, wie beispielsweise feinen Partikeln mit Durchmesser von 0,1 µm bis 10 µm, wie Gipsstaub, belastet. Der Einsatz von Oxidationskatalysatoren in diesen Abgasströmen zur Oxidation von Kohlenmonoxid und organischen Verbindungen ist daher nach wie vor schwierig und wirtschaftlich kaum möglich.

Aufgabe der vorliegenden Erfindung ist es, einen Wabenkatalysator, ein Verfahren zur Abgasreinigung mit dem Wabenkatalysator, sowie eine Verwendung des Wabenkatalysators zur Verfügung zu stellen, die bezüglich der oben genannten Nachteile verbessert sind.

Die Aufgabe wird gelöst durch einen Wabenkatalysator nach Anspruch 1. Weitere Ausgestaltungen des Wabenkatalysators, sowie ein Verfahren zur Oxidation von Kohlenmonoxid und organischen Luftschadstoffen in einem Abgasstrom mit dem Wabenkatalysator, sowie eine Verwendung des Wabenkatalysators sind Gegenstand weiterer Patentansprüche.

Gegenstand der vorliegenden Erfindung ist ein Wabenkatalysator zur Oxidation von Kohlenmonoxid und organischen Luftschadstoffen in einem Abgasstrom, wobei der Wabenkatalysator aus einem Material gebildet ist, das Oxide des Wolframs und Titans enthält, die mit einem Edelmetall dotiert sind und wobei der Wabenkatalysator eine Wabendichte unterhalb von 20 cpsi aufweist.

Die Erfinder haben festgestellt, dass Wabenkatalysatoren mit einer sehr geringen Dichte der Waben unterhalb von 20 cpsi (cells per square inch; 1 square inch = 6,4516 cm²) dazu geeignet sind, die Oxidation von Kohlenmonoxid und organischen Luftschadstoffen in einem Abgasstrom ohne großen Aktivitätsverlust der Katalysatoren zu katalysieren. Wabenkatalysatoren, die höhere cpsi-Werte aufweisen, zeichnen sich durch eine schnelle Ablagerung von Staubschichten auf den Katalysatoroberflächen aus, was zu einer schnellen Deaktivierung des Katalysators im laufenden Betrieb führt. Im Gegensatz dazu können bei erfindungsgemäßen Katalysatoren sehr lange Betriebsdauern im kontinuierlichen Verfahren von mindestens 1000, bevorzugt mindestens 1500, weiter bevorzugt mindestens 2000 Betriebsstunden gewährleistet werden, ohne dass es zu einer nennenswerten Deaktivierung des Katalysators kommt. Somit ist eine Unterbrechung des Betriebs zur Reinigung der Katalysatoren bei Verwendung der erfindungsgemäßen Katalysatoren nicht notwendig. Es ist vielmehr möglich, erfindungsgemäße Katalysatoren durch ein Luftschwert ohne Unterbrechung des Betriebs zu reinigen und so deren Aktivität fast vollständig wieder herzustellen Bevorzugt beträgt die Wabendichte weniger als 15 cpsi, weiter bevorzugt weniger als 10 cpsi, noch bevorzugter weniger als 9 cpsi, noch stärker bevorzugt weniger als 8 cpsi oder sogar weniger als 7 cpsi, am stärksten bevorzugt weniger als 5 cpsi. Die Untergrenze kann bei 3 cpi oder 2 cpsi liegen. Bei derartigen Wabendichten kann einerseits nach wie vor eine ausreichend große katalytische Oberfläche der Katalysatoren für die Oxidation der Schadstoffe zur Verfügung gestellt werden, wobei aber keine nennenswerte Deaktivierung der Katalysatoren durch Staubschichten zu beobachten ist.

Wabenkatalysatoren können insbesondere einstückig (monolitisch) ausgeführt sein und eine Vielzahl von Kanälen (Waben) aufweisen, die im Betrieb von dem Abgas durchströmt werden. Der Querschnitt der Kanäle kann jede beliebige Form, beispielsweise eine sechseckige Form oder eine runde Form annehmen. Dabei stellen die Innenwandungen der Kanäle die katalytisch aktive Oberfläche zur Verfügung, an der die Oxidation der Verbindungen im Abgas durchgeführt werden kann.

Wabenkatalysatoren können unterschiedliche Bauarten aufweisen. Beispielsweise kann ein inertes Trägermaterial mit Wabenstruktur, z.B. Silikate, wie Cordierit zur Verfügung gestellt werden. Auf diesem inerten Trägermaterial können dann die katalytisch aktiven Schichten, aus Wolframoxid und Titanoxid, die mit einem Edelmetall dotiert sind, abgeschieden werden.

Alternativ ist es möglich, eine Wabenstruktur umfassend z.B. Wolframoxid und Titanoxid als Trägermaterial herzustellen. In einem nachfolgenden Schritt kann dann dieses Trägermaterial mit Wabenstruktur mittels Imprägnierung mit dem Edelmetall dotiert werden, wobei ein Vollkatalysator gebildet wird. Unter einem Vollkatalysator versteht man dabei einen Wabenkatalysator, der kein inertes Trägermaterial aufweist.. Während der Imprägnierung dringt das Edelmetall in tiefere Schichten des Vollkatalysators ein, so dass bei einem eventuellen Abrieb der obersten Schicht des Katalysators darunter liegende Schichten mit dem Edelmetall freigelegt werden und dadurch die katalytische Aktivität des Katalysators auch bei Abrieb durch Stäube erhalten bleibt.

Besonders vorteilhaft ist es, wenn der Grundkörper des Wabenkatalysators aus den Oxiden des Wolframs und Titans gebildet ist. Im vorliegenden Fall kann der dieser Vollkatalysator beispielsweise mittels Vollextrusion und anschließender Imprägnation mit dem Edelmetall gebildet werden.

Ein Vorteil eines erfindungsgemäßen aus den Oxiden des Wolframs und Titans als Vollkatalysator gebildeten Wabenkatalysators ist, dass während des Betriebes eine Verminderung der katalytischen Aktivität durch Abrieb vermindert werden kann. Insbesondere die in den Abgasen vorhandenen Stäube können einen Abrieb des Katalysators während des Betriebs zur Folge haben. Daher sind als Vollkatalysatoren ausgebildete erfindungsgemäße Wabenkatalysatoren besonders gut zur Abgasreinigung in Abgasen mit einem hohen Anteil an Stäuben von beispielsweise zumindest 1 g/m³ geeignet.

Gemäß einer weiteren Ausführungsform der vorliegenden Erfindung umfasst der Wabenkatalysator einen Grundkörper, der ein poröses Material mit einer BET-Oberfläche von größer 20 m²/g, bevorzugt größer 30 m²/g aufweist. Die BET-Oberfläche kann insbesondere zwischen 20 bis 100 m²/g liegen. Ein poröses Material mit einer derart hohen BET-Oberfläche gewährleistet eine große katalytische Oberfläche trotz der geringen Anzahl an Kanälen von unterhalb 20 cpsi.

Bei einer weiteren Ausführungsform eines erfindungsgemäßen Wabenkatalysators umfasst die Dotierung Platin. Platin ist besonders gut geeignet, als katalytisch aktives Zentrum für die Oxidation der Schadstoffe in den Abgasen zu dienen, ist dabei aber im Gegensatz zu anderen Edelmetallen nicht so stark anfällig für die Vergiftung durch z.B. schwefelhaltige Bestandteile der Abgase. Ein weiterer Vorteil von Platin besteht darin, dass es auch die Oxidation von ungesättigten und/oder aromatischen Kohlenwasserstoffen, wie z.B. Benzol katalysiert und im Gegensatz zu Pd und anderen Edelmetallen keine stabilen Edelmetallsalze, wie Sulfate, Halogenide, Phosphate oder Silikate bildet, die die katalytische Aktivität beeinträchtigen können.

Platin kann als alleinige Dotierung in erfindungsgemäßen Wabenkatalysatoren vorhanden sein. Weiterhin ist es noch möglich, dass neben der Dotierung mit einem Edelmetall wie Platin, noch eine zusätzliche Dotierung mit Palladium vorhanden ist. Palladium kann insbesondere Vorteile bei der Oxidation von Kohlenmonoxid aufweisen, da mit diesem Edelmetall die CO-Oxidation besonders gut durchgeführt werden kann.

Gemäß einer weiteren Ausführungsform der vorliegenden Erfindung können bis zu 5 g/l Wabenmaterial an Edelmetall, bevorzugt bis zu 3 g/l Wabenmaterial als Dotierung vorhanden sein. Insbesondere können 0,2 bis 2,8; 0,3 bis 2,4; 0,5 bis 2,0; g/l Edelmetall, bezogen auf das Volumen des Materials des Wabenkatalysators als Dotierung vorhanden sein. Bei Kenntnis der Zelldichte der Waben und der Wandstärke der Waben kann ein Fachmann die Mengenangaben für die Dotierstoffe auf das Gesamtgewicht des Katalysators beziehen. Z.B. wiegt 1 I eines erfindungsgemäßen Wabenkatalysators mit einer Wabendichte von 4,8 cpsi 0,444 kg und 1 I eines erfindungsgemäßen Wabenkatalysators mit einer Wabendichte von 9,3 cpsi 0,370 kg. Die Erfinder haben festgestellt, dass bei derartigen Mengen an Dotierstoffen besonders gut die Oxidation von Kohlenmonoxid und organischen Luftschadstoffen durchgeführt werden kann.

Für den Fall, dass ein weiteres Edelmetall als Co-Dotierstoff vorhanden ist, kann dies beispielsweise in Mengen von bis zu 5 g/l, bevorzugt 1 g/l bis 2 g/l Katalysatorwabenmaterial bis 0,5 g/l eingesetzt werden.

Bei einer weiteren Ausführungsform von erfindungsgemäßen Wabenkatalysatoren beträgt das Atomverhältnis Titan zu Wolfram > 8, bevorzugt ≥ 16, weiter bevorzugt ≥ 30 weiter bevorzugt ≥ 50 und weiter bevorzugt ≥ 60. Bei einem derartigen Wert lässt sich die katalytische Oxidation von Kohlenmonoxid und organischen Luftschadstoffen zu Kohlendioxid und ggf. Wasser besonders gut durchführen.

Wolfram, das beispielsweise in Form von Wolframtrioxid eingesetzt werden kann, ist insbesondere geeignet, die Oxide des Titans, beispielsweise Titandioxid zu stabilisieren. Insbesondere kann das Titandioxid in der Rutil- oder bevorzugt in der Anatas-Modifikation vorliegen. Wolfram ist dabei insbesondere in der Lage, die Anatas-Titandioxid-Modifikation des Katalysators zu stabilisieren und kann insbesondere auch die katalytische Aktivität des Titandioxids verstärken. Wolfram kann weiterhin noch die oxidierenden Eigenschaften der erfindungsgemäßen Wabenkatalysatoren modifizieren.

Wolfram kann vorteilhafterweise auch die Adhäsion der im Abgasstrom vorhandenen Partikel an den Katalysator vermindern.

Bevorzugt liegt das Titandioxid in einer Menge von 75 bis 99, besonders bevorzugt 85 bis 98 Gew.-% bezogen auf das Gesamtgewicht des Wabenkatalysators vor. Wolframoxid liegt bevorzugt in einer Menge von 1 bis 25, besonders bevorzugt 2 bis 15 Gew.-%, bezogen auf das Gesamtgewicht des Wabenkatalysators, vor.

Erfindungsgemäße Wabenkatalysatoren können, müssen aber nicht Vanadium enthalten. Insbesondere kann Vanadium in einer Menge bis zu 1 Gew.-% bezogen auf das Gesamtgewicht des Wabenkatalysators vorhanden sein. Die Erfinder haben festgestellt, dass im Gegensatz zu anderen Anwendungen der Wabenkatalysatoren die Oxidation von CO und organischen Luftschadstoffen durch die Anwesenheit von Vanadium nicht gestört wird. Daher muss Vanadium bei der Herstellung von erfindungsgemäßen Wabenkatalysatoren nicht mit großem Aufwand vom Herstellungsprozess ausgeschlossen werden. Beispielsweise können erfindungsgemäße Wabenkatalysatoren mit den gleichen Fertigungsmaschinen hergestellt werden, die auch zur Herstellung von Vanadium-haltigen VWT-Wabenkatalysatoren (Vanadium-, Wolfram-, Titandioxid-Katalysatoren) für die SCR-Katalyse dienen.

Gemäß einer weiteren Ausführungsform können zur Stabilisierung der Wabenstruktur zusätzliche Verbindungen, ausgewählt aus den Oxiden des Siliziums, Aluminiums oder Calciums, sowie Kombinationen davon, vorhanden sein. Die Verbindungen können insbesondere Siliziumdioxid, Glasfasern, Al₂O₃ sowie Calciumoxid sowie Kombinationen davon sein. Diese Verbindungen können in Mengen bis 10 Gew.-% an dem Gesamtgewicht der Wabenkatalysatoren vorhanden sein.

Gegenstand der vorliegenden Erfindung ist auch ein Verfahren zur Oxidation von Kohlenmonoxid und organischen Luftschadstoffen in einem Abgasstrom zu Kohlendioxid und ggf. Wasser, wobei die erfindungsgemäßen Wabenkatalysatoren, die bereits oben beschrieben wurden, mit dem Abgasstrom und Luft bei einer Temperatur von mindestens 350 °C in Kontakt gebracht werden.

Insbesondere können die erfindungsgemäßen Wabenkatalysatoren mit dem Abgasstrom in Kontakt gebracht werden, ohne vorher die im Abgas vorhandenen Stäube zu entfernen oder zu verringern. Somit kann bei dem erfindungsgemäßen Verfahren insbesondere eine besonders einfache und effektive Oxidation von Kohlenmonoxid im "High Dust"-Bereich des Abgases erfolgen, wobei der Abgasstrom mehr als 1 g/m³, weiterhin mehr als 20 g/m³ oder weiterhin mehr als 40 g/m³ bzw. mehr als 50 g/m³ Staubpartikel aufweisen kann. Die Staubpartikel können dabei insbesondere auch einen Durchmesser von etwa 0,1 µm bis 10 µm, beispielsweise Gipsstaub, aufweisen, die besonders geeignet sind, eine relativ kompakte Staubschicht mit geringer Gasdurchlässigkeit zu bilden, was bei herkömmlichen Wabenkatalysatoren zu einer schnellen Inaktivierung der Katalysatoren führt.

Gemäß einer weiteren Ausführungsform der vorliegenden Erfindung können die Staubpartikel eine Mischung aus Rußpartikeln und Partikeln aus basischem Zementstaub sein, die besonders leicht Staubschichten auf den Katalysatorwaben bilden können, die bei herkömmlichen Katalysatoren aber nicht bei erfindungsgemäßen Katalysatoren zur Inaktivierung führen.

Gemäß einer weiteren Ausführungsform kann das Verfahren neben der Oxidation von CO und organischen Luftschadstoffen auch zur Oxidation von Rußpartikeln eingesetzt werden. Weiterhin können erfindungsgemäße Katalysatoren auch zur Oxidation von einigen in Abgasströmen vorhandenen organischen Verbindungen, wie z.B. Olefinen, Oxygenaten, Aldehyden wie z.B. Formaldehyd, Alkoholen wie z.B. Methanol eingesetzt werden.

Gemäß einer weiteren Ausführungsform eines erfindungsgemäßen Verfahrens ist dieses als kontinuierliches Verfahren ausgebildet, wobei für eine Dauer von zumindest 1000 Stunden, bevorzugt zumindest 1500 Stunden, weiter bevorzugt zumindest 2000 Stunden das Verfahren ohne Unterbrechung durchgeführt werden kann. Wie bereits oben beschrieben, können die erfindungsgemäßen Wabenkatalysatoren auch besonders gut zur Oxidation der Schadstoffe in Abgasen eingesetzt werden, die einen hohen Staubanteil von zum Beispiel mehr als 1 g/m³, insbesondere mehr als 20 g/m³, aufweisen. Im Gegensatz zum erfindungsgemäßen Verfahren müsste bei der Verwendung von herkömmlichen Katalysatoren die Anlage häufig abgeschaltet werden, um den Katalysator abkühlen zu lassen und ihn dann wieder von den abgeschiedenen Staubschichten zu befreien.

Daher wird eine Oxidation von CO und organischen Luftschadstoffen mit herkömmlichen Katalysatoren überhaupt nicht durchgeführt. Während eines erfindungsgemäßen kontinuierlichen Verfahrens kann die Reinigung der erfindungsgemäßen Wabenkatalysatoren besonders einfach z.B. mittels eines Luftschwertes erfolgen ohne dass es zu einer Unterbrechung des Verfahrens kommt. Im Gegensatz dazu können herkömmliche Wabenkatalysatoren auch mittels eines Luftschwertes nur unzureichend gereinigt werden, so dass mit zunehmender Betriebsdauer die katalytische Aktivität deutlich abnimmt.

Weiterhin ist es möglich, bei den erfindungsgemäßen Verfahren die Oxidation bei Temperaturen von 350 °C bis 450 °C durchzuführen. Derartige Temperaturen treten häufig bei den Abgasen von beispielsweise Zementwerken auf, die hohe Anteile an Stäuben aufweisen und daher mittels herkömmlicher Katalysatoren nicht oder nur schwer gereinigt werden können. Weiter bevorzugt können Ausführungsformen von dem erfindungsgemäßen Verfahren zur Oxidation von CO und organischen Luftschadstoffen bei Temperaturen von mindestens 400°C, weiter bevorzugt mehr als 400 °C und mindestens 410 °C durchgeführt werden, da bei diesen Temperaturen die Oxidation von CO und organischen Luftschadstoffen nach wie vor gut durch erfindungsgemäße Katalysatoren vermittelt wird.

Erfindungsgemäße Wabenkatalysatoren können bei Temperaturen zwischen 350 °C und 430 °C Konversionsraten für CO von zumindest 35%, bevorzugt 45% bis 50%, weiter bevorzugt 55% bis 60% erreichen. Bei höheren Temperaturen von etwa 370 °C und höher können auch Konversionsraten von > 60%, beispielsweise etwa 65% erreicht werden. Unter diesen Bedingungen werden beispielsweise auch Umsätze von Ethylen von ∼ 60 % und von Methanol um ∼50 % erreicht.

Gegenstand der vorliegenden Erfindung ist auch weiterhin die Verwendung eines Wabenkatalysators, wie oben beschrieben, zur Oxidation von Kohlenmonoxid zu CO₂. Wie bereits oben besprochen, können dabei während der Oxidation mehr als 1 g/m³, weiterhin mehr als 20 g/m³ oder 40 g/m³ bzw. mehr als 50 g/m³ Staubpartikel vorhanden sein.

Im Folgenden sollen Aspekte der Erfindung noch näher anhand von Ausführungsbeispielen und Figuren erläutert werden. Es zeigen:

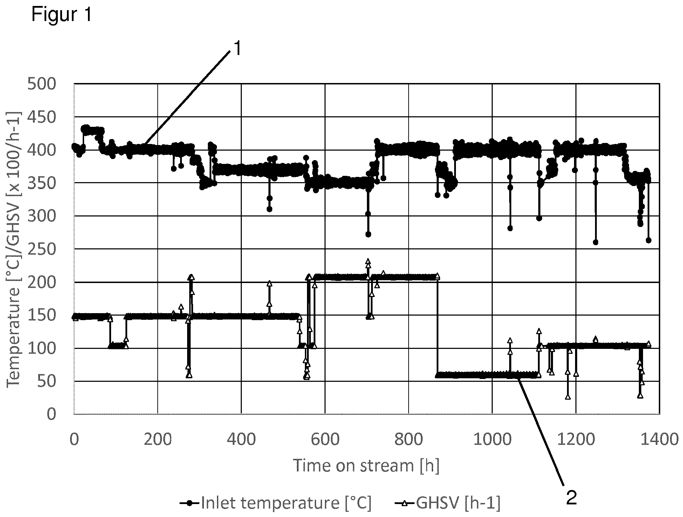

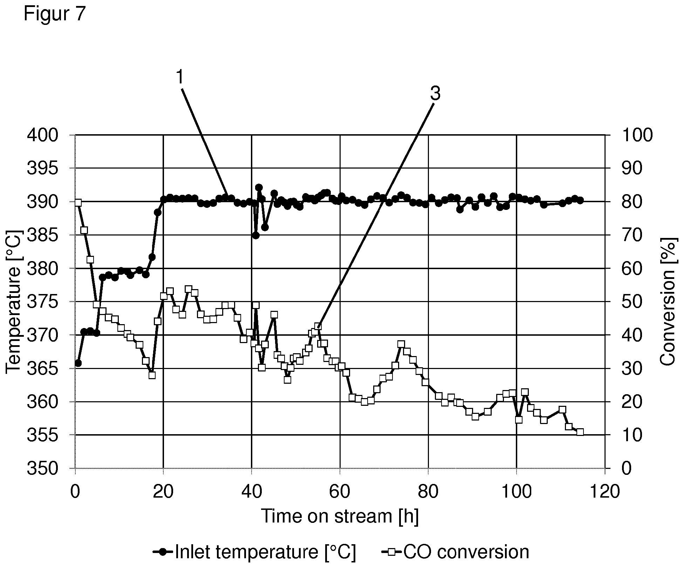

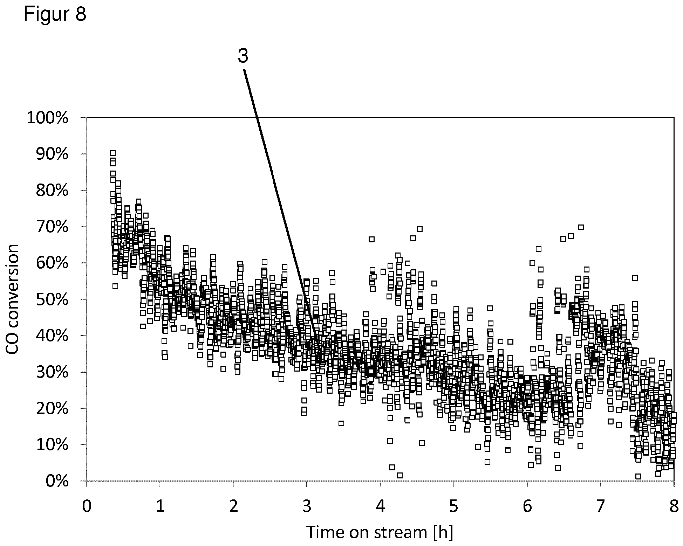

Die Figuren 1 bis 6 Diagramme über den Umsatz von CO für Ausführungsformen des erfindungsgemäßen Katalysators, und die Figuren 7 und 8 Diagramme zum Umsatz des CO bei Verwendung herkömmlicher Katalysatoren.

### Erfindungsgemäßes Ausführunasbeispiel:

Ein erfindungsgemäßer Wolframoxid-Titandioxid-Wabenkatalysator wurde folgendermaßen hergestellt.

### Herstellung:

Wolframoxid-Titandioxid-Vollextrudatwaben (13 x 13, Wabendichte: 4,8 cpsi) wurden mit einer Lösung von Platinnitrat imprägniert, 2 Stunden bei 120 °C getrocknet und 3 Stunden bei 550 °C kalziniert. Die Platindotierung der fertigen Waben lag bei 1,0 g/l (Figur 1 und 2), 2,0 g/l Pt (Figur 3 und 4) und 0,6 g/l (Figur 4 und 5).

Der Katalysator wurde für den Aktivitätstest in einer Slip-Stream-Anlage im High-Dust-Trakt (ungefähr 50 g/l Zementstaub) eines Zementwerks eingebaut. Die Strömungsrate GHSV (Gas Hourly Space Velocity) betrug zwischen 10.000 und 15.000 h⁻¹. Die Temperatur wurde zwischen 350 °C und 430 °C variiert. Periodisch (etwa alle 2 h) wurde dabei der Zementstaub mittels Luftschwert abgeblasen.

Je nach Bedingungen wurden folgende Kohlenmonoxidumsätze erreicht: 18% bei 350 °C und 15.000 h⁻¹ GHSV, 35% bei 370 °C und 15.000 h⁻¹, 45% bis 50% bei 400 °C und 15.000 h⁻¹ und 55% bis 60% bei 430 °C und 15.000 h⁻¹ und ungefähr 65% bei 400 °C und 15.000 h⁻¹. Das Abblasen des Zementstaubs mittels Luftschwert führte jeweils zu einer vollständigen Wiederherstellung der Aktivität des Katalysators. Nach gegenwärtig 1450 Betriebsstunden ist noch keine Deaktivierung festzustellen.

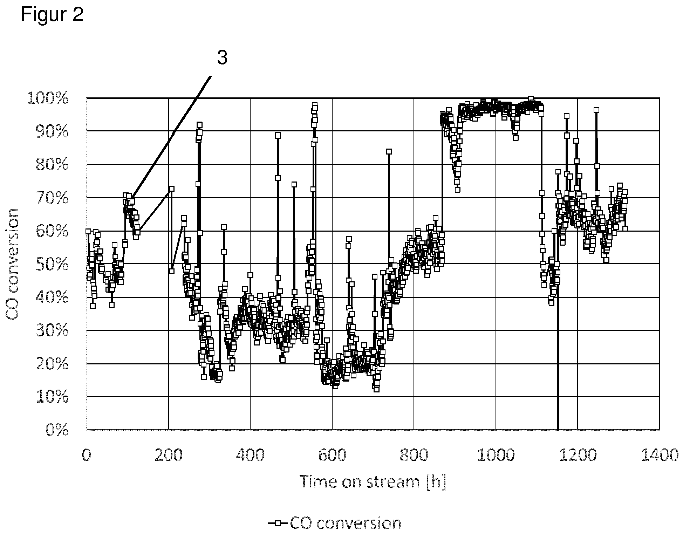

Figuren 1 und 2 zeigen ein Diagramme, in dem die Temperatur des erfindungsgemäßen Katalysators bezeichnet mit 1, die GHSV bezeichnet mit 2, sowie die Konversionsrate für CO, bezeichnet mit 3 in Abhängigkeit von der Betriebsdauer während des Experiments gezeigt werden. Dabei ist zu erkennen, dass bei einer anfänglichen Temperatur des Katalysators von 400 °C eine Konversionsrate von etwa 60% erreicht wird. Unter diesen Bedingungen werden beispielsweise auch Umsätze von Ethylen von ∼ 60 % und von Methanol um ∼50 % erreicht. Im Gegensatz dazu liegt bei einer niedrigen Temperatur von etwa 370 °C die Konversionsrate bei etwa 35%.

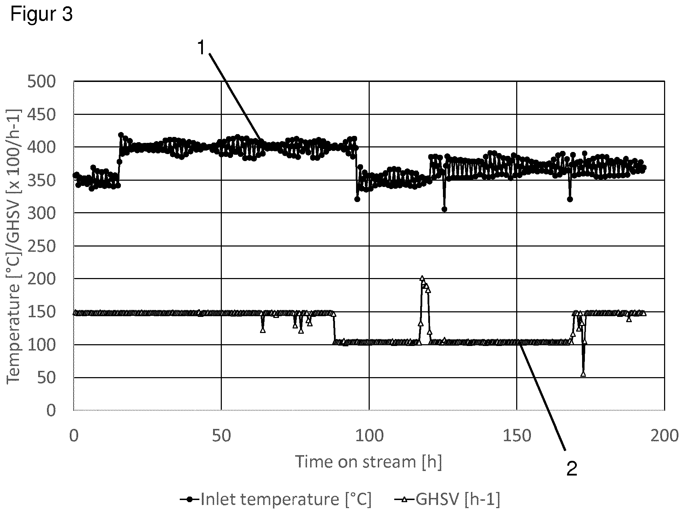

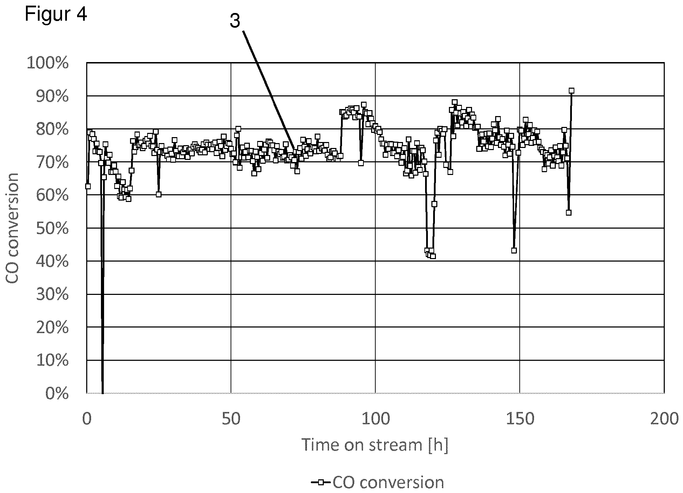

Figur 3 und 4 zeigt ein Diagramm mit der Temperatur 1 eines erfindungsgemäßen Katalysators, der GHSV bezeichnet mit 2 und der CO-Konversionsrate, bezeichnet mit 3 über eine Betriebsdauer von mehr als 180 Std. Bei dem erfindungsgemäßen Katalysator handelt es sich um einen WT-Wabenkatalysator, der insgesamt 13 ×13 Waben mit einer Wabendichte von 4,8 cpsi umfasst und mit einer Dotierstoffkonzentration von 2 g Pt/l Wabenkatalysator imprägniert wurde. Es ist deutlich zu erkennen, dass hohe CO-Umsatzraten von z.T. über 70% über die gesamte Betriebsdauer erreicht werden.

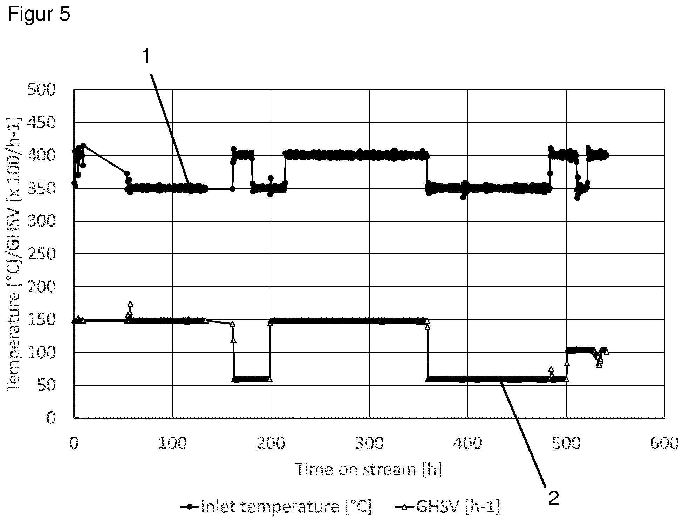

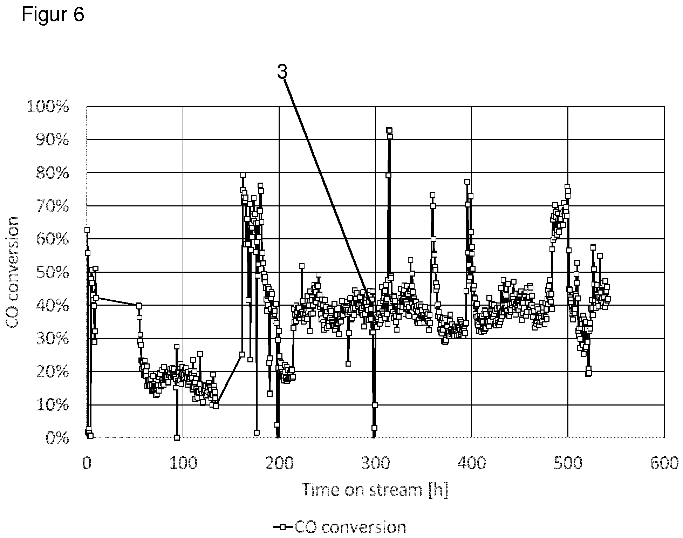

Figur 5 und 6 zeigt ein Diagramm mit der Temperatur 1 eines erfindungsgemäßen Katalysators, der GHSV bezeichnet mit 2 und der CO-Konversionsrate, bezeichnet mit 3 über eine Betriebsdauer von mehr als 540 Std. Bei dem erfindungsgemäßen Katalysator handelt es sich um einen WT-Wabenkatalysator, der insgesamt 13 ×13 Waben mit einer Wabendichte von 4,8 cpsi umfasst und mit einer Dotierstoffkonzentration von 0,6 g Pt/l Wabenkatalysator imprägniert wurde. Es ist deutlich zu erkennen, dass hohe CO-Umsatzraten von z.T. über 40% bis über 60% über die gesamte Betriebsdauer erreicht werden.

### Vergleichsbeispiel 1:

Cordierit-Waben mit einer Zelldichte von 100 cpsi wurden mit 30 g/l Wolframoxid-Titandioxid-Washcoat beschichtet (30 g/l) und anschließend bei 120 °C getrocknet und bei 550 °C kalziniert. Trocknung und Kalzinierung wurden hierbei in einem Bandofen mit einer Durchlaufzeit von 3,2 h durchgeführt. Die mit Washcoat beschichteten Waben wurden dann mit Pt- und Pd-Nitrat imprägniert und für 2 h bei 120 °C getrocknet.

Anschließend wurde 3 h bei 550 °C kalziniert. Die Edelmetalldotierung der fertigen Waben lag bei 1,25 g/l Pt und 0,25 g/l Pd.

Der Katalysator wurde für den Performance-Test in einer Slip-Stream-Anlage im Low-Dust-Trakt (ungefähr 50 mg/l Zementstaub) eines Zementwerks eingebaut. Die GHSV betrug um 45.000 h⁻¹. Die Temperatur wurde zwischen 365 °C und 390 °C variiert.

Der Katalysator zeigte zu Beginn des Versuchs hohe Umsätze an CO um 80%, jedoch wurde trotz der weitaus geringeren Staubfrachten des zu behandelnden Abgases eine kontinuierliche Deaktivierung beobachtet. Nach 40 Betriebsstunden betrug der CO-Umsatz nur noch 40%, nach 100 Betriebsstunden um 20%.

Figur 7 zeigt in einem Diagramm die Temperatur des Katalysators (mit 1 bezeichnete Kurve) während des Experiments. Die mit 3 bezeichnete Kurve zeigt den Umsatz an CO an. Deutlich ist zu erkennen, dass nach anfänglich hoher Aktivität von etwa 80% trotz einer Steigerung der Temperatur des Katalysators von 365 °C auf über 390 °C die katalytische Aktivität nicht ansteigt, sondern vielmehr nach einem anfänglichen scharfen Abfallen kontinuierlich auf bis etwa 10% nach etwa 115 Betriebsstunden abfällt.

### Vergleichsbeispiel 2:

### Herstellung des Wabenkatalysators

Wolframoxid-Titandioxid-Vollextrudatwaben mit einer Zelldichte von 100 cpsi wurden mit einer Lösung von Platinsulfit imprägniert, 2 h bei 120 °C getrocknet und 3 h bei 550 °C kalziniert. Die Platindotierung der fertigen Waben lag bei 1,25 g/l.

Der Katalysator wurde für den Performance-Test in einer Slip-Stream-Anlage im Low-Dust-Trakt (50 mg/l Zementstaub) eines Zementwerks eingebaut. Die GHSV betrug um die 36.000 h⁻¹, die Temperatur wurde bei 250 °C gehalten.

Der Katalysator zeigt zu Beginn des Feldversuchs hohe CO-Umsätze um 70%. Jedoch wurde trotz der weitaus geringeren Staubfrachten des zu behandelnden Abgases eine kontinuierliche Deaktivierung beobachtet.

Figur 8 zeigt die CO-Konversionsrate, bezeichnet mit 3 in Abhängigkeit von den Betriebsstunden während des Experiments. Nach 3 Betriebsstunden betrug der CO-Umsatz noch 40% und nach 8 Betriebsstunden deutlich unter 20%.

## Patentansprüche

1. Wabenkatalysator zur Oxidation von CO und organischen Luftschadstoffen in einem Abgasstrom, wobei der Wabenkatalysator aus einem Material gebildet ist, das Oxide des Wolframs und Titans enthält, die mit einem Edelmetall dotiert sind und wobei der Wabenkatalysator eine Wabendichte unterhalb von 20 cpsi aufweist.

2. Wabenkatalysator nach Anspruch 1, wobei der Grundkörper des Wabenkatalysators aus den Oxiden des Wolframs und Titans als Vollkatalysator gebildet ist.

3. Wabenkatalysator nach einem der vorhergehenden Ansprüche, aufweisend einen Grundkörper, der ein poröses Material mit einer BET-Oberfläche von > 30 m²/g aufweist.

4. Wabenkatalysator nach einem der vorhergehenden Ansprüche, der mit Pt dotiert ist.

5. Wabenkatalysator nach einem der vorhergehenden Ansprüche, wobei eine zusätzliche Dotierung mit Pd vorhanden ist.

6. Wabenkatalysator nach einem der vorhergehenden Ansprüche, wobei das Ti/W-Verhältnis > 8 beträgt.

7. Wabenkatalysator nach einem der vorhergehenden Ansprüche, wobei zur Stabilisierung der Wabenstruktur zusätzliche Verbindungen, ausgewählt aus Siliziumdioxid, Glasfasern, Aluminiumoxid, oder Calciumoxid und Kombinationen davon, vorhanden sind.

8. Wabenkatalysator nach einem der vorhergehenden Ansprüche, wobei bis zu 5 g/l, bevorzugt bis zu 2 g/l, weiter bevorzugt 0,2 bis 1,8; 0,3 bis 1,4; 0,4 bis 1,2; 0,5 bis 1,1 oder 0,7 bis 0,9 g/l Edelmetall, bezogen auf das Volumen des Materials des Wabenkatalysators als Dotierung vorhanden sind.

9. Verfahren zur Oxidation von CO in einem Abgasstrom zu CO₂, wobei ein Wabenkatalysator nach einem der vorhergehenden Ansprüche mit dem Abgasstrom und Luft bei einer Temperatur von mindestens 350 °C in Kontakt gebracht wird.

10. Verfahren nach Anspruch 9, wobei der Abgasstrom mehr als 1 g/m³, weiterhin mehr als 20 g/m³ oder 40 g/m³ Staubpartikel aufweist.

11. Verfahren nach Anspruch 10, wobei die Staubpartikel eine Mischung aus Rußpartikeln und Partikeln aus basischem Zementstaub sind.

12. Verfahren nach einem der Ansprüche 9 bis 11, wobei die Oxidation bei einer Temperatur von 350 bis 450 °C stattfindet.

13. Verfahren nach einem der Ansprüche 9 bis 12, ausgebildet als kontinuierliches Verfahren, das für eine Dauer von zumindest 1000 Std., bevorzugt zumindest 1500 h weiter bevorzugt zumindest 2000 h durchgeführt wird.

14. Verfahren zur Oxidation von Rußpartikeln, Olefinen, Oxygenaten, Aldehyden und/oder Alkoholen in einem Abgasstrom, wobei ein Wabenkatalysator nach einem der vorhergehenden Ansprüche mit dem Abgasstrom und Luft bei einer Temperatur von mindestens 350 °C in Kontakt gebracht wird.

15. Verwendung eines Wabenkatalysators einem der Ansprüche 1 bis 8 zur Oxidation von CO zu CO₂.

16. Verwendung eines Wabenkatalysators nach dem vorhergehenden Patentanspruch, wobei während der Oxidation mehr als 1 g/m³, weiterhin mehr als 20 g/m³ oder 40 g/m³ Staubpartikel vorhanden sind.
